# EUROPÄISCHE PATENTSCHRIFT

(11) **EP 2 165 063 B1**
(45) Veröffentlichungstag und Bekanntmachung des Hinweises auf die Patenterteilung: **15.06.2011**
(21) Anmeldenummer: 08735206.8
(22) Anmeldetag: 12.04.2008
(51) Int. Cl.: F02D 41/00, F02D 19/06

(54) **VERFAHREN ZUM BETREIBEN EINER BRENNKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 30.05.2007 DE 102007025076
(43) Veröffentlichungstag der Anmeldung: 24.03.2010
(73) Patentinhaber: Volkswagen Aktiengesellschaft, 38436 Wolfsburg (DE)
(72) Erfinder: POTT, Ekkehard, 38518 Gifhorn (DE); THEOBALD, Jörg, 38165 Lehre (DE)
(86) Internationale Anmeldenummer: PCT/EP2008/002922
(87) Internationale Veröffentlichungsnummer: WO 2008/145228

(56) Entgegenhaltungen:
- EP-A- 0 718 484
- WO-A-92/08888
- WO-A-95/35441
- WO-A-2004/097196
- WO-A-2005/031149
- DE-A1-102006 056 389
- US-A- 6 035 837

## Beschreibung

Die Erfindung betrifft ein Verfahren zum Betreiben einer Brennkraftmaschine in Form eines Ottomotors, insbesondere eines Kraftfahrzeugs, wobei Ottokraftstoff, insbesondere Benzin oder Ethanol (E85), mittels wenigstens eines Kraftstoffinjektors direkt in wenigstens einen Brennraum der Brennkraftmaschine eingespritzt wird und wobei wahlweise anstatt des Einspritzens von Ottokraftstoff oder zusätzlich zum Einspritzen von Ottokraftstoff die Brennkraftmaschine mit Gas, insbesondere CNG (Compressed Natural Gas) oder LPG (Liquified Petroleum Gas), betrieben wird, gemäß dem Oberbegriff des Patentanspruchs 1.

Bei einem Ottomotor mit Benzindirekteinspritzung münden die Hochdruckeinspritzinjektoren zur Einspritzung von flüssigen Ottomotorenkraftstoffen direkt in den Brennraum. Infolgedessen werden die Injektoren beim Betrieb des Motors durch die im Brennraum stattfindende Verbrennung mit heißen Verbrennungsgasen beaufschlagt und heizen sich auf. Gekühlt werden die Injektoren durch den eingespritzten Kraftstoff sowie die in direkter Umgebung zum Injektor verlaufenden Wasserkanäle der Motorkühlung. Beim Betrieb eines solchen direkteinspritzenden Ottomotors mit CNG (Compressed Natural Gas), wie beispielsweise aus der EP 0 718 484 B1 bekannt, besteht die Gefahr, dass sich während des CNG-Betriebes die Hochdruckinjektoren aufgrund des fehlenden Durchsatzes von flüssigem Kraftstoff erhitzen und infolge dessen geschädigt werden bzw. der sich noch im Innern der Injektoren befindende Kraftstoff Ablagerungen bildet, die sich wiederum negativ auf das Injektorverhalten auswirken. Je länger der Gasbetrieb mit deaktivierter Benzineinspritzung andauert, umso höher ist die Gefahr, dass Ablagerungen aus dem stehenden Kraftstoff innerhalb des Injektors auftreten, die einen korrekten Betrieb des Injektors beeinträchtigen.

Aus der WO 2004/097196 A1 ist ein LPG-Kraftstoffsystem für Ottomotoren bekannt, wobei der Ottokraftstoff mittels Ottokraftstoff-Einspritzventile und das LPG mittels LPG-Einspritzventile in ein Saugrohr des Ottomotors eingespritzt werden. Um die Funktionsfähigkeit der Ottokraftstoff-Einspritzventile aufrecht zu erhalten während der Ottomotor mit LPG betrieben wird, wird beim Abschalten des Ottomotors, automatisch in den Ottokraftstoff-Modus umgeschaltet, wobei der Ottomotor für einige Sekunden mit Ottokraftstoff betrieben wird, um die Einspritzventile zu schmieren in diese im funktionsfähigen Zustand zu halten. Gleichzeitig läuft die LPG-Pumpe weiter, um den LPG-Einspritzventilen flüssiges LPG zuzuführen und gasförmiges LPG vollständig zu entfernen. Nach einer vorbestimmten Zeitspanne wird dann auf den Betrieb mit LPG zurück geschaltet.

Der Erfindung liegt die Aufgabe zugrunde, ein Verfahren der o.g. Art hinsichtlich der Funktionssicherheit der Kraftstoffinjektoren zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass der Ottokraftstoff direkt in wenigstens einen Brennraum der Brennkraftmaschine eingespritzt wird, wobei eine Temperaturbelastung des wenigstens einen Kraftstoffinjektors während des Betriebs mit Gas in Abhängigkeit von dem Motorbetriebspunkt bestimmt sowie gewichtet und über die Zeit aufintegriert wird, wobei die automatisierte Umschaltung auf die und/oder Zuschaltung der Einspritzung von Ottokraftstoff während des Betriebs mit Gas erfolgt, wenn diese Temperaturbelastung einen vorbestimmten Schwellwert überschreitet.

Dies hat den Vorteil, dass die Kraftstoffinjektoren auch im Gasbetrieb ausreichend gekühlt und ggf. an bzw. in den Kraftstoffinjektoren vorhandene Ablagerungen bereits in der Entstehung entfernt werden. Dies erzielt eine Robustheitssteigerung bivalenter Gasmotoren durch einen Minderung nachhaltiger Verkokungen an den Kraftstoffinjektoren.

Zweckmäßigerweise erfolgt die Umschaltung auf den Betrieb mit Ottokraftstoff oder die Zuschaltung des Betriebs mit Ottokraftstoff in vorbestimmten Betriebsphasen der Brennkraftmaschine, beispielsweise im Leerlauf, bei Einleitung einer Schubabschaltphase und/oder bei Beendigung einer Schubabschaltphase, und/oder unter vorbestimmten Betriebsbedingungen der Brennkraftmaschine, beispielsweise oberhalb einer Kühlmitteltemperatur von 40°C.

Nach dem Eintreten einer vorbestimmten Betriebsphase und/oder einer vorbestimmten Betriebsbedingung, bei der die Umschaltung auf den Betrieb mit Ottokraftstoff oder die Zuschaltung des Betriebs mit Ottokraftstoff erfolgen soll, wird bevorzugt eine vorbestimmte Totzeit von beispielsweise 2 Sekunden bis 10 Sekunden, insbesondere 5 Sekunden abgewartet, bis tatsächlich die Umschaltung auf den Betrieb mit Ottokraftstoff oder die Zuschaltung des Betriebs mit Ottokraftstoff erfolgt.

In einer bevorzugten Ausführungsform umfasst die vorbestimmte Menge des Ottokraftstoffes, welche während der automatisiert aktivierten Phase mit Einspritzung von Ottokraftstoff durch den wenigstens einen Kraftstoffinjektors strömt, einen Teil, das gesamte und/oder ein Vielfaches des in einem Kraftstoffinjektor gespeicherten Volumens von Ottokraftstoff.

Zweckmäßigerweise umfasst das Vielfache des in einem Kraftstoffinjektor gespeicherten Volumens von Ottokraftstoff das 2- bis 200-fache, insbesondere das 3- bis 5-fache des in einem Kraftstoffinjektor gespeicherten Volumens.

Nach der automatisiert aktivierten Phase mit Einspritzung von Ottokraftstoff wird bevorzugt eine vorbestimmte Sperrzeit von beispielsweise 200 Sekunden bis 40.000 Sekunden, insbesondere 2.000 Sekunden bis 10.000 Sekunden, insbesondere 5.000 Sekunden, abgewartet, bevor eine erneute automatisierte Aktivierung der Einspritzung von Ottokraftstoff zugelassen wird.

Nach einer vorbestimmten Maximalzeit von beispielsweise 500 Sekunden bis 60.000 Sekunden, insbesondere 3.000 Sekunden bis 15.000 Sekunden, insbesondere 6.000 Sekunden, des Betriebs der Brennkraftmaschine im Gasbetrieb, während der keine automatisierte Aktivierung der Einspritzung von Ottokraftstoff erfolgt ist, wird unabhängig vom Betriebszustand und Betriebsparametern der Brennkraftmaschine die Einspritzung von Ottokraftstoff automatisiert aktiviert.

Die Zeitspanne für die Maximalzeit beginnt bevorzugt erst ab Ende einer Sperrzeit zu laufen.

Die Erfindung wird im Folgenden anhand der Zeichnung näher erläutert. Diese zeigt in
- Fig. 1: ein schematisches Flussdiagramm einer bevorzugten Ausführungsform eines erfindungsgemäßen Verfahrens und
- Fig. 2: eine graphische Darstellung des Ablaufs eines NEFZ-Fahrprofils.

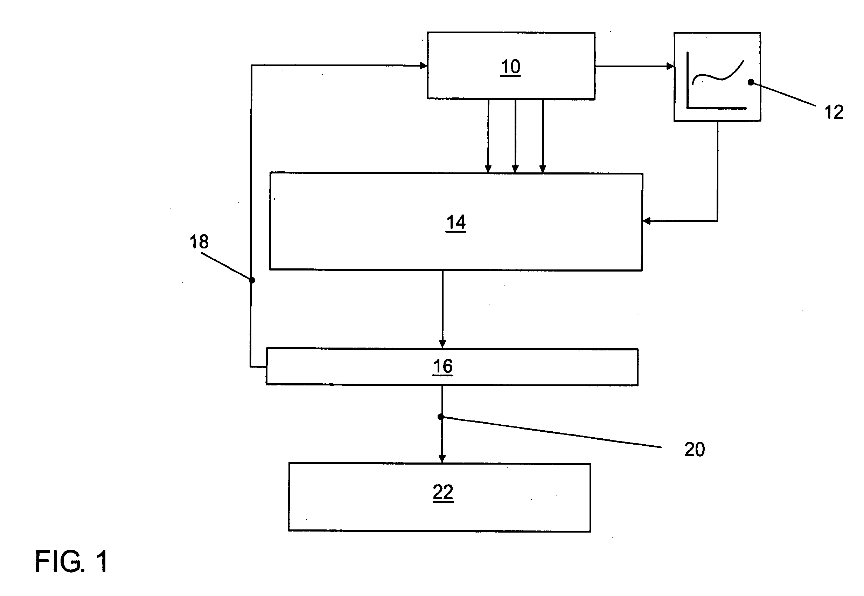

Nachfolgend wird eine beispielhafte Ausführungsform eines erfindungsgemäßen Verfahrens zum Betreiben einer bivalenten Brennkraftmaschine, d.h. einer Brennkraftmaschine, welche wahlweise mit einem aus Kraftstoffinjektoren in Brennräume der Brennkraftmaschine eingespritzten Ottokraftstoff (Benzin oder Ethanol) oder mit bevorzugt in ein Saugrohr der Brennkraftmaschine eingebrachtes Gas (CNG oder LPG) betreibbar ist, unter Bezugnahme auf Fig. 1 beschrieben.

In einem Funktionsblock 10 "Betriebspunkt/Betriebsparameter" wird ein Betriebspunkt und werden Betriebsparameter, wie beispielsweise Temperaturen, der Brennkraftmaschine bestimmt und sowohl einem Wichtungskennfeld 12 wie auch einem Funktionsblock 14 "Integration zu einem Belastungskennwert der Temperaturbelastung des Injektors" zugeführt. Im Wichtungskennfeld 12 ist eine Temperaturbelastung der Kraftstoffinjektoren als Funktion von Betriebspunkt und Betriebsparametern, wie beispielsweise einer Motortemperatur, abgelegt. Diese so bestimmte Temperaturbelastung der Kraftstoffinjektoren wird dem Funktionsblock 14 zugeführt, in dem dieser Wert zu einem Belastungskennwert über die Zeit aufintegriert wird. Das Ergebnis dieser Integration wird in einem nachfolgenden Funktionsblock 16 "Belastungskennwert > Grenzwert" mit einem vorbestimmten Grenzwert oder Schwellwert verglichen. Ist der im Funktionsblock 14 bestimmte Belastungskennwert kleiner als der oder gleich dem Grenzwert, wird über eine Verzweigung 18 zurück zu Funktionsblock 10 gesprungen. Ist dagegen der im Funktionsblock 14 bestimmte Belastungskennwert größer als der Grenzwert, wird über eine Verzweigung 20 zu Funktionsblock 22 "Betriebsartenumschaltung: von Gas auf Ottokraftstoffbetrieb" gesprungen, wobei temporär und periodisch geregelt bzw. gesteuert so lange von Gas-Betrieb auf Ottokraftstoffbetrieb umgeschaltet bzw. der Ottokraftstoffbetrieb dem Gas-Betrieb zugeschaltet wird, bis mindestens ein Teil, besser das ganze Ottokraftstoffvolumen, insbesondere mehr als das Ottokraftstoffvolumen im Innern des Kraftstoffinjektors eingespritzt worden ist, so dass der Injektor durch den nachfließenden Kraftstoff gekühlt wird und Ablagerungen vermieden werden. Anschließend wird durch die Motorsteuerung wieder auf Gas-Betrieb zurück geschaltet. Die Umschaltung durch das Motorsteuergerät erfolgt bevorzugt anhand einer hinterlegten Strategie: Die erfahrungsgemäße Temperaturbelastung des Kraftstoff-Hochdruckinjektors im Gas-Betrieb des Motors in Abhängigkeit vom Motorbetriebspunkt, wie im Wichtungskennfeld 12 hinterlegt, wird zeitlich aufintegriert und gewichtet. Ab einem Schwellwert wird die Umschaltung von Gas auf Ottokraftstoff und wieder zurück zu Gas (Spülvorgang) durchgeführt. Vorzugsweise wird der Ottokraftstoffbetrieb dabei bei Einleitung und/oder Beendigung über Schubabschaltphase vorgesehen.

Die bei Umschaltung bzw. Zuschaltung der Einspritzung von Ottokraftstoff (Spülvorgang) kumuliert eingespritzte Ottokraftstoffmenge beträgt beispielsweise mindestens dem Ottokraftstoffvolumen des Injektors, damit eine vollständige Spülung des Injektors erfolgt. Besser ist jedoch, das 2- bis 100-fache Volumen, ideal das 3- bis 5-fache Volumen zu spülen.

Es erfolgt wahlweise in dieser Spülphase ein reiner Ottokraftstoffbetrieb oder ein Ottokraftstoff-Gas-Mischbetrieb.

Vorzugsweise erfolgt der Spülvorgang im Leerlauf, bevorzugt oberhalb einer vorgebbaren Mindest-Kühlrnitteltemperatur von z.B. 40°C. Nach Erkennen des Leerlaufbetriebs wird zunächst eine applizierbare Totzeit von 2 Sekunden bis 10 Sekunden, ideal 5 Sekunden, der reine Gasbetrieb aufrechterhalten, bevor der Spülvorgang, d.h. die temporäre Aktivierung der Einspritzung von Ottokraftstoff, beginnt.

In vorteilhafter Weise ist nach Abschluss eines Spülvorgangs eine Sperrzeit definiert, in der auch bei erneutem Auftreten eines Leerlaufbetriebs kein weiterer Spülvorgang angestoßen wird. Diese Sperrzeit beträgt beispielsweise 200 Sekunden bis 40.000 Sekunden, optimal 2.000 Sekunden bis 10.000 Sekunden, insbesondere um 5.000 Sekunden.

Falls innerhalb eines vorbestimmten Zeitraums nach der Sperrzeit kein Spülvorgang im Leerlauf erfolgt, wird nach Ablauf einer Maximalzeit unabhängig vom Betriebszustand der Brennkraftmaschine ein Spülvorgang initiiert. Diese Maximalzeit liegt beispielsweise bei 500 Sekunden bis 60.000 Sekunden, optimal 3.000 Sekunden bis 15.000 Sekunden, insbesondere um 6.000 Sekunden.

Einmal begonnene Spülvorgänge werden vorzugsweise nicht unterbrochen, sondern unabhängig vom Betriebszustand der Brennkraftmaschine fortgeführt.

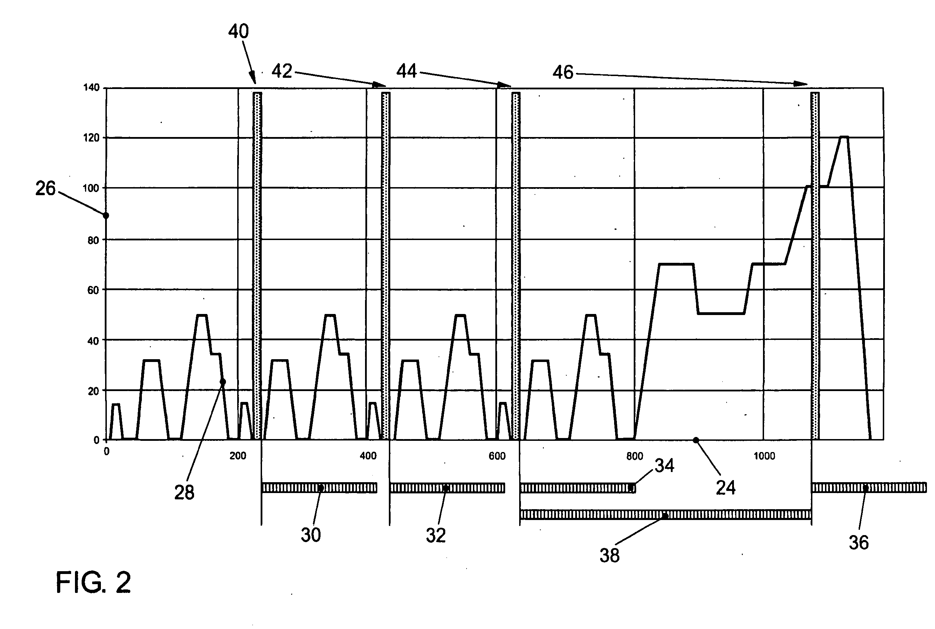

Fig. 2 veranschaulicht das erfindungsgemäße Auslösen von Spülvorgängen während eines sog. NEFZ-Fahrprofils (NEFZ: Neuer Europäischer Fahrzyklus). Hierbei wird die Brennkraftmaschine zunächst ausschließlich mit Gas betrieben und es soll ein Spülvorgang ohne vorangehende Totzeit immer dann ausgelöst werden, wenn ein Leerlauf vorliegt und die Motortemperatur über 40°C liegt. Auf der horizontalen Achse 24 ist die Zeit t in Sekunden und auf der vertikalen Achse 26 ist eine Fahrzeuggeschwindigkeit V_{fzg} in km/h aufgetragen. Ein Graph 28 veranschaulicht die Fahrzeuggeschwindigkeit V_{fzg} über die Zeit t während des NEFZ-Fahrprofils. Bei 30, 32, 34 und 36 ist jeweils eine Sperrzeit aktiv, die ein Anstoßen von Phasen mit Ottokraftstoffbetrieb (Spülvorgang) unterdrückt. Mit 38 ist eine Maximalzeit bezeichnet, nach der eine Phasen mit Ottokraftstoffbetrieb erzwungen wird, obwohl kein Leerlauf vorliegt. Mit 40, 42, 44 und 46 sind Betriebsphasen bezeichnet, in denen eine Spülung erfolgt, d.h. Phasen mit Ottokraftstoffbetrieb.

Während der ersten ca. 210s des NEFZ liegt die Motortemperatur noch unterhalb von 40°C so dass eine Aktivierung des Ottokraftstoffbetriebs unterdrückt wird. Die Brennkraftmaschine wird ausschließlich mit Gas betrieben. Nach der ersten Spülphase 40 verhindert zunächst die Sperrzeit 30 trotz Leerlauf weitere Phasen mit Ottokraftstoffbetrieb. Erst bei der zweiten Spülphase 42 ist die Sperrzeit 30 abgelaufen. Gleiches gilt für die nächste Sperrzeit 32 und die dritte Spülphase 44. Nach dieser dritten Spülphase 44 verhindert zunächst die Sperrzeit 34 weitere Phasen mit Ottokraftstoffbetrieb trotz des Auftretens von Leerlaufphasen. Nach etwas mehr als 800 Sekunden ist zwar die Sperrzeit 34 abgelaufen, jedoch treten keine Leerlaufphasen mehr auf, so dass keine Phasen mit Ottokraftstoffbetrieb initiiert werden. Erst nach Ablauf der Maximalzeit 38 wird eine vierte Spülphase 46 erzwungen, obwohl kein Leerlauf vorliegt. Im Anschluss ist wieder eine Sperrzeit 36 aktiv, die bis zum Ende des NEFZ weitere Phasen mit Ottokraftstoffbetrieb unterdrückt.

## Patentansprüche

1. Verfahren zum Betreiben einer Brennkraftmaschine in Form eines Ottomotors, insbesondere eines Kraftfahrzeugs, wobei Ottokraftstoff, insbesondere Benzin oder Ethanol (E85), mittels wenigstens eines Kraftstoffinjektors eingespritzt wird und wobei wahlweise anstatt des Einspritzens von Ottokraftstoff oder zusätzlich zum Einspritzen von Ottokraftstoff die Brennkraftmaschine mit Gas, insbesondere CNG (Compressed Natural Gas) oder LPG (Liquified Petroleum Gas), betrieben wird, wobei während des Betriebs der Brennkraftmaschine allein mit Gas automatisiert für eine vorbestimmte Zeitspanne auf den Betrieb mit Ottokraftstoff derart umgeschaltet oder der Betrieb mit Ottokraftstoff zum Betrieb mit Gas derart zugeschaltet wird, dass eine vorbestimmte Menge des Ottokraftstoffes durch den wenigstens einen Kraftstoffinjektor strömt, wobei anschließend automatisiert wieder auf den Betrieb allein mit Gas zurück geschaltet wird, **dadurch gekennzeichnet, dass** der Ottokraftstoff direkt in wenigstens einen Brennraum der Brennkraftmaschine eingespritzt wird, wobei eine Temperaturbelastung des wenigstens einen Kraftstoffinjektors während des Betriebs mit Gas in Abhängigkeit von dem Motorbetriebspunkt bestimmt sowie gewichtet und über die Zeit aufintegriert wird, wobei die automatisierte Umschaltung auf die und/oder Zuschaltung der Einspritzung von Ottokraftstoff während des Betriebs mit Gas erfolgt, wenn diese Temperaturbelastung einen vorbestimmten Schwellwert überschreitet.

2. Verfahren nach Anspruch 1, **dadurch gekennzeichnet, dass** die Umschaltung auf den Betrieb mit Ottokraftstoff oder die Zuschaltung des Betriebs mit Ottokraftstoff in vorbestimmten Betriebsphasen und/oder unter vorbestimmten Betriebsbedingungen der Brennkraftmaschine erfolgt.

3. Verfahren nach Anspruch 2, **dadurch gekennzeichnet, dass** die vorbestimmten Betriebsphasen einen Leerlauf, die Einleitung einer Schubabschaltphase und/oder die Beendigung einer Schubabschaltphase der Brennkraftmaschine umfassen.

4. Verfahren nach Anspruch 2 oder 3, **dadurch gekennzeichnet, dass** nach dem Eintreten einer vorbestimmten Betriebsphase und/oder einer vorbestimmten Betriebsbedingung, bei der die Umschaltung auf den Betrieb mit Ottokraftstoff oder die Zuschaltung des Betriebs mit Ottokraftstoff erfolgen soll, eine vorbestimmte Totzeit abgewartet wird, bis tatsächlich die Umschaltung auf den Betrieb mit Ottokraftstoff oder die Zuschaltung des Betriebs mit Ottokraftstoff erfolgt.

5. Verfahren nach Anspruch 4, **dadurch gekennzeichnet, dass** die vorbestimmte Totzeit 2 Sekunden bis 10 Sekunden, insbesondere 5 Sekunden beträgt.

6. Verfahren nach einem der Ansprüche 2 bis 5, **dadurch gekennzeichnet, dass** die vorbestimmten Betriebsbedingungen eine Temperatur eines Kühlmittels von wenigstens 40°C umfassen.

7. Verfahren nach wenigstens einem der vorhergehenden Ansprüche, **dadurch gekennzeichnet, dass** die vorbestimmte Menge des Ottokraftstoffes, weiche während der automatisiert aktivierten Phase mit Einspritzung von Ottokraftstoff durch den wenigstens einen Kraftstoffinjektors strömt, einen Teil, das gesamte und/oder ein Vielfaches des in einem Kraftstoffinjektor gespeicherten Volumens von Ottokraftstoff umfasst.

8. Verfahren nach Anspruch 7, **dadurch gekennzeichnet, dass** das Vielfache des in einem Kraftstoffinjektor gespeicherten Volumens von Ottokraftstoff das 2- bis 200-fache, insbesondere das 3- bis 5-fache des in einem Kraftstoffinjektor gespeicherten Volumens umfasst.

9. Verfahren nach wenigstens einem der vorhergehenden Ansprüche, **dadurch gekennzeichnet, dass** nach der automatisiert aktivierten Phase mit Einspritzung von Ottokraftstoff eine vorbestimmte Sperrzeit abgewartet wird, bevor eine erneute automatisierte Aktivierung der Einspritzung von Ottokraftstoff zugelassen wird.

10. Verfahren nach Anspruch 9, **dadurch gekennzeichnet, dass** die Sperrzeit 200 Sekunden bis 40.000 Sekunden, insbesondere 2.000 Sekunden bis 10.000 Sekunden, insbesondere 5.000 Sekunden, beträgt.

11. Verfahren nach wenigstens einem der vorhergehenden Ansprüche, **dadurch gekennzeichnet, dass** nach einer vorbestimmten Maximalzeit des Betriebs der Brennkraftmaschine im Gasbetrieb, während der keine automatisierte Aktivierung der Einspritzung von Ottokraftstoff erfolgt ist, unabhängig vom Betriebszustand und Betriebsparametern der Brennkraftmaschine die Einspritzung von Ottokraftstoff automatisiert aktiviert wird.

12. Verfahren nach Anspruch 11, **dadurch gekennzeichnet, dass** die Maximalzeit 500 Sekunden bis 60.000 Sekunden, insbesondere 3.000 Sekunden bis 15.000 Sekunden, insbesondere 6.000 Sekunden beträgt.

13. Verfahren nach Anspruch 9 oder 10 und Anspruch 11 oder 12, **dadurch gekennzeichnet, dass** die Maximalzeit erst nach Ende einer Sperrzeit zu laufen beginnt.

## Claims

1. Method for operating an internal combustion engine in the form of a carburetor engine, in particular of a motor vehicle, carburetor fuel, in particular gasoline or ethanol (E85), being injected by means of at least one fuel injector, and the internal combustion engine being operated selectively, instead of with the injection of carburetor fuel or in addition to the injection of carburetor fuel, by means of gas, in particular CNG (Compressed Natural Gas) or LPG (Liquified Petroleun Gas), there being, during the operation of the internal combustion engine solely with gas, an automated changeover to operation with carburetor fuel for a predetermined time span in such a way or operation with carburetor fuel being hooked up to operation with gas in such a way that a predetermined quantity of carburetor fuel flows through the at least one fuel injector, subsequently there being an automated switch back again to operation solely with gas, **characterized in that** the carburetor fuel is injected directly into at least one combustion space of the internal combustion engine, a thermal load upon the at least one fuel injector during operation with gas being determined as a function of the engine operating point and also being weighted and integrated over time, the automated changeover to and/or the hooking up of the injection of carburetor fuel taking place during operation with gas when this thermal load overshoots a predetermined threshold value.

2. Method according to Claim 1, **characterized in that** the changeover to operation with carburetor fuel or the hooking up of operation with carburetor fuel takes place in predetermined operating phases and/or under predetermined operating conditions of the internal combustion engine.

3. Method according to Claim 2, **characterized in that** the predetermined operating phases comprise idling, the initiation of an overrun cut-off phase and/or the termination of an overrun cut-off phase of the internal combustion engine.

4. Method according to Claim 2 or 3, **characterized in that**, after a predetermined operating phase and/or a predetermined operating condition has occurred in which the changeover to operation with carburetor fuel or the hooking up of operation with carburetor fuel is to take place, a predetermined dead time elapses until the changeover to operation with carburetor fuel or the hooking up of operation with carburetor fuel actually takes place.

5. Method according to Claim 4, **characterized in that** the predetermined dead time amounts to 2 seconds to 10 seconds, in particular to 5 seconds.

6. Method according to one of Claims 2 to 5, **characterized in that** the predetermined operating conditions comprise a temperature of a coolant of at least 40°C.

7. Method according to at least one of the preceding claims, **characterized in that** the predetermined quantity of carburetor fuel which flows through the at least one fuel injector during the carburetor fuel injection phase activated in an automated manner comprises part of, the entire and/or a multiple of the volume of carburetor fuel stored in a fuel injector.

8. Method according to Claim 7, **characterized in that** the multiple of the volume of carburetor fuel stored in a fuel injector comprises 2 to 200 times, in particular 3 to 5 times, the volume stored in a fuel injector.

9. Method according to at least one of the preceding claims, **characterized in that**, after the carburetor fuel injection phase activated in an automated manner, a predetermined blocking time elapses before a renewed automated activation of carburetor fuel injection is permitted.

10. Method according to Claim 9, **characterized in that** the blocking time amounts to 200 seconds to 40 000 seconds, in particular 2000 seconds to 10 000 seconds, in particular 5000 seconds.

11. Method according to at least one of the preceding claims, **characterized in that**, after a predetermined maximum time of operation of the internal combustion engine with gas, during which no automated activation of the injection of carburetor fuel has taken place, the injection of carburetor fuel is activated in an automated manner independently of the operating state and operating parameters of the internal combustion engine.

12. Method according to Claim 11, **characterized in that** the maximum time amounts to 500 seconds to 60 000 seconds, in particular 3000 seconds to 15 000 seconds, in particular 6000 seconds.

13. Method according to Claim 9 or 10 and Claim 11 or 12, **characterized in that** the maximum time starts to run only after the end of a blocking time.

## Revendications

1. Procédé pour faire fonctionner un moteur à combustion interne sous forme de moteur à allumage par étincelle, notamment d'un véhicule automobile, dans lequel du carburant pour moteur à allumage par étincelle, en particulier de l'essence ou de l'éthanol (E85), est injecté au moyen d'au moins un injecteur de carburant et dans lequel, de manière sélective, au lieu de l'injection de carburant pour moteur à allumage par étincelle, ou en plus de l'injection de carburant pour moteur à allumage par étincelle, le moteur à combustion interne est alimenté en gaz, en particulier en GNC (Gaz naturel comprimé) ou en GPL (Gaz de pétrole liquéfié), le moteur à combustion interne, pendant le fonctionnement du moteur à combustion interne seulement avec du gaz, étant commuté automatiquement pendant un intervalle de temps prédéterminé à un fonctionnement avec du carburant pour moteur à allumage par étincelle, ou le fonctionnement avec du carburant pour moteur à allumage par étincelle étant superposé à un fonctionnement avec du gaz de telle sorte qu'une quantité prédéterminée du carburant pour moteur à allumage par étincelle s'écoule à travers l'au moins un injecteur de carburant, puis une commutation au fonctionnement seulement avec du gaz ayant lieu à nouveau automatiquement, **caractérisé en ce que** le carburant pour moteur à allumage par étincelle est injecté directement dans au moins une chambre de combustion du moteur à combustion interne, une sollicitation en température de l'au moins un injecteur de carburant pendant le fonctionnement, avec du gaz étant définie en fonction du point de fonctionnement du moteur et étant pondérée et intégrée dans le temps, la commutation automatisée et/ou la superposition de l'injection de carburant pour moteur à allumage par étincelle pendant le fonctionnement avec du gaz se produisant lorsque cette sollicitation en température dépasse une valeur seuil prédéterminée.

2. Procédé selon la revendication 1, **caractérisé en ce que** la commutation au fonctionnement avec du carburant pour moteur à allumage par étincelle ou la superposition du fonctionnement avec du carburant pour moteur à allumage par étincelle a lieu dans des phases de fonctionnement prédéterminées et/ou dans des conditions de fonctionnement prédéterminées du moteur à combustion interne.

3. Procédé selon la revendication 2, **caractérisé en ce que** les phases de fonctionnement prédéterminées incluent une marche à vide, l'introduction d'une phase de coupure d'injection en décélération et/ou la fin d'une phase de coupure d'injection en décélération du moteur à combustion interne.

4. Procédé selon la revendication 2 ou 3, **caractérisé en ce qu'**après l'amorce d'une phase de fonctionnement prédéterminée et/ou d'une condition de fonctionnement prédéterminée, dans laquelle la commutation au fonctionnement avec du carburant pour moteur à allumage par étincelle ou la superposition du fonctionnement avec du carburant pour moteur à allumage par étincelle doit avoir lieu, un temps mort prédéterminé est respecté, jusqu'à ce que la commutation au fonctionnement avec du carburant pour moteur à allumage par étincelle ou la superposition du fonctionnement avec du carburant pour moteur à allumage par étincelle ait effectivement lieu.

5. Procédé selon la revendication 4, **caractérisé en ce que** le temps mort prédéterminé est de 2 à 10 secondes, notamment de 5 secondes.

6. Procédé selon l'une quelconque des revendications 2 à 5, **caractérisé en ce que** les conditions de fonctionnement prédéterminées incluent une température d'un réfrigérant d'au moins 40°C.

7. Procédé selon au moins l'une quelconque des revendications précédentes, **caractérisé en ce que** la quantité prédéterminée de carburant pour moteur à allumage par étincelle qui s'écoule à travers l'au moins un injecteur de carburant pendant la phase activée automatiquement avec injection de carburant pour moteur à allumage par étincelle inclut une partie, la totalité et/ou un multiple du volume de carburant pour moteur à allumage par étincelle stocké dans un injecteur de carburant.

8. Procédé selon la revendication 7, **caractérisé en ce que** le multiple du volume de carburant pour moteur à allumage par étincelle stocké dans un injecteur de carburant inclut un multiple de 2 à 200 fois, notamment de 3 à 5 fois, le volume stocké dans un injecteur de carburant.

9. Procédé selon au moins l'une quelconque des revendications précédentes, **caractérisé en ce qu'**après la phase activée automatiquement avec injection de carburant pour moteur à allumage par étincelle, un temps de blocage prédéterminé est respecté avant qu'une nouvelle activation automatisée de l'injection de carburant pour moteur à allumage par étincelle ne soit autorisée.

10. Procédé selon la revendication 9, **caractérisé en ce que** le temps de blocage est de 200 à 40 000 secondes, notamment de 2000 à 10 000 secondes, en particulier de 5000 secondes.

11. Procédé selon au moins l'une quelconque des revendications précédentes, **caractérisé en ce qu'**après un temps maximal prédéterminé de fonctionnement du moteur à combustion interne en fonctionnement avec du gaz, pendant lequel aucune activation automatisée de l'injection de carburant pour moteur à allumage par étincelle n'a eu lieu, l'injection de carburant pour moteur à allumage par étincelle est activée automatiquement indépendamment de l'état de fonctionnement et des paramètres de fonctionnement du moteur à combustion interne.

12. Procédé selon la revendication 11, **caractérisé en ce que** le temps maximal est de 500 à 60 000 secondes, notamment de 3000 à 15 000 secondes, en particulier de 6000 secondes.

13. Procédé selon la revendication 9 ou 10 et selon la revendication 11 ou 12, **caractérisé en ce que** le temps maximal commence seulement après la fin d'un temps de blocage.
